# EUROPEAN PATENT APPLICATION

(11) **EP 2 444 683 A1**
(43) Date of publication of application: **25.04.2012**
(21) Application number: 10789204.4
(22) Date of filing: 14.06.2010
(51) Int. Cl.: F16D 25/08

(54) **CLUTCH ACTUATOR AND CLUTCH PROVIDED WITH THE SAME**

(30) Priority: 15.06.2009 JP 2009141968
(71) Applicant: Bosch Corporation, Tokyo 150-8360 (JP)
(72) Inventor: NARIKIYO, Kazuaki, Hiki-gun Saitama 355-0813 (JP)
(74) Representative: Knapp, Thomas
(86) International application number: PCT/JP2010/003926
(87) International publication number: WO 2010/146822

(57) **Abstract**

A clutch actuator (9) of the present invention includes a housing (10) that is formed by integrally molding an inner tube (10a) and a case (10b) as a single member. Further, a seal member (18) that is foreign matter intrusion preventing means is disposed on the inner peripheral surface of a cylindrical portion (10b₁) of the case (10b). Moreover, a release bearing (15) is attached, in such a way as to be attachable and detachable by means of a snap ring (16), to a piston (11). Because of this, there is realized a high-precision, inexpensive clutch actuator (9) whose structure is simplified, whose number of parts is reduced, and in which the attachment and detachment of the release bearing (15) becomes easy.

## Description

### BACKGROUND ART

The present invention relates to the technical field of a clutch actuator that performs connection control and disconnection control of a clutch and to a clutch that is equipped with the clutch actuator.

Conventionally, a clutch is configured to connect the output shaft of an engine and the input shaft of a transmission and also to disconnect the output shaft of the engine and the input shaft of the transmission. Usually, in such a clutch, a clutch actuator is used in order to control the connection or the disconnection between the output shaft of the engine and the input shaft of the transmission.

As a conventional clutch actuator, a clutch actuator where the output shaft of the engine and the input shaft of the transmission are connected as a result of a friction material that is attached to, in such a way as to be integrally rotatable with, the input shaft of the transmission being pushed by the biasing force of biasing means such as a diaphragm spring against a flywheel that is attached to, in such a way as to be integrally rotatable with, the output shaft of the engine and where the output shaft of the engine and the input shaft of the transmission are disconnected as a result of the biasing force of the biasing means being reduced or eliminated by fluid pressure is known in German Patent Application Publication DE 10323953 A1.

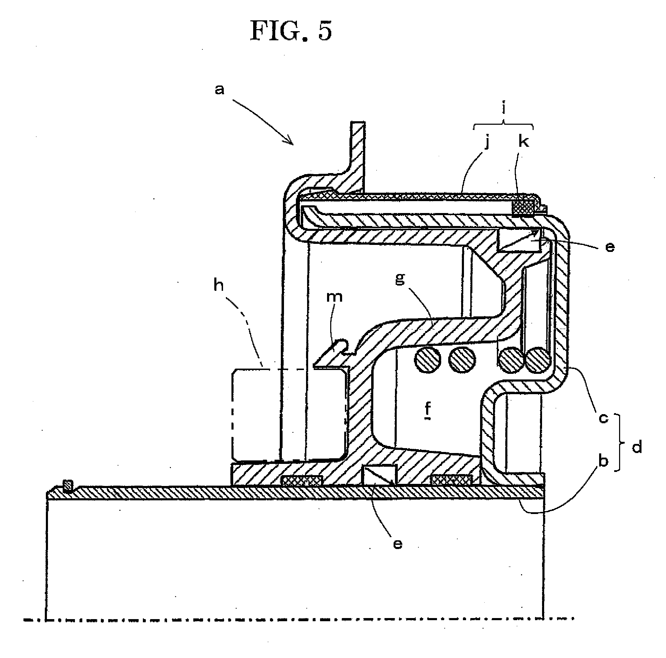

FIG. 5 is a partial cross-sectional view in an axial direction of the clutch actuator described in DE 10323953 A1. As shown in FIG. 5, a clutch actuator a has: a housing d that includes an inner tube b and a case c; a piston g that is fitted together, in such a way as to be slidable in the axial direction and to be fluid-tight by means of a seal member e, between the outer peripheral surface of the inner tube b and the inner peripheral surface of a cylindrical portion of the case c and demarcates and forms a fluid actuation chamber f between itself and the housing d; and a release bearing h that is attached to, in such a way as to be integrally movable with, the piston g.

Additionally, the clutch actuator a is in the state shown in FIG. 5 when fluid pressure is not introduced to the fluid actuation chamber f, and the piston g is in a right limit position where it has most entered the housing d. In this state, the release bearing h does not strongly push an unillustrated diaphragm spring to the left, so an unillustrated friction material is pushed by the biasing force of the diaphragm spring against a similarly unillustrated flywheel, and the clutch a is in a connected state.

When fluid pressure is introduced to the fluid actuation chamber f, the piston g moves to the left while being guided on the inner tube b, and the release bearing h strongly pushes the diaphragm spring to the left. Because of this, the biasing force of the diaphragm spring is reduced or eliminated, so the friction material is not pushed against the flywheel and the clutch a enters a disconnected state.

Incidentally, in the clutch actuator a described in DE 10323953 A1, foreign matter intrusion preventing means i is disposed in order to prevent foreign matter such as dirt existing on the outer peripheral side of the housing d from intruding into the inside of the housing d from between the inner peripheral surface of the cylindrical portion of the case c and the outer peripheral surface of a cylindrical portion of the piston g. This foreign matter intrusion preventing means i has a cylindrical cover j, which covers the outer peripheral surface of the cylindrical portion of the case c, and a seal member k, which is attached to the inner peripheral surface of this cover j and seals the inner peripheral surface of the cover j and the outer peripheral surface of the cylindrical portion of the case c. The cover j is attached to the piston g, and the cover j and the seal member k move integrally with this piston g together with the movement of the piston g.

However, because this conventional clutch actuator a uses the dedicated cover j as the foreign matter intrusion preventing means i, there are the problems that not only is the structure complex but the number of parts increases and the cost is high. Further, the inner tube b and the case c are formed separately and are joined to each other by welding or the like. For this reason, there are the problems that not only is a high-precision housing not obtained but processing becomes complicated. Moreover, the release bearing h is fixed to the piston g by means of a hook-like specially shaped stopper m. For this reason, it is necessary to form this specially shaped stopper m on the piston g, and there are the problems that not only is the shape of the piston g complex but the attachment and detachment of the release bearing h with respect to the piston g is troublesome.

### DISCLOSURE OF THE INVENTION

It is an object of the present invention to provide: a high-precision inexpensive clutch actuator whose structure is simplified, whose number of parts is reduced, and in which the attachment and detachment of the release bearing can be done simply; and a clutch equipped with the clutch actuator.

In order to achieve this object, a clutch actuator pertaining to the present invention is a clutch including at least: a housing that has an inner cylinder and an outer cylinder; a piston that is fitted together, in such a way as to be fluid-tight and slidable, with the outer peripheral surface of the inner cylinder and the inner peripheral surface of the outer cylinder, demarcates and forms a fluid actuation chamber, and is actuated by fluid pressure of an actuation fluid that is introduced to the fluid actuation chamber; and a release bearing that is disposed on the piston in such a way as to be integrally movable with this piston and disconnects a clutch, wherein the housing is formed as a result of the inner cylinder and the outer cylinder being integrally molded as a single member, and foreign matter intrusion preventing means that prevents foreign matter from intruding into the inside of the fluid actuation chamber from between the inner peripheral surface of the outer cylinder and the piston is disposed on the outer cylinder.

Further, in the clutch actuator pertaining to the present invention, the foreign matter intrusion preventing means is a seal member that is disposed on the inner peripheral surface side of the outer cylinder.

Moreover, in the clutch actuator pertaining to the present invention, the release bearing is attached, in such a way as to be attachable and detachable by means of a snap ring , to the piston.

A clutch of the present invention is a clutch including at least: a first shaft to which the output of a drive device is transmitted; a drive-side rotating member that is attached to the first shaft in such a way as to be integrally rotatable with this first shaft; a second shaft of a driven device that is driven by the output of the drive device; a driven-side rotating member that is attached to the second shaft in such a way as to be integrally rotatable with this second shaft and so as to be pushable against and separable from the drive-side rotating member; a driven-side rotating member pushing member that pushes the driven-side rotating member against the drive-side rotating member; and a clutch actuator that actuates and controls the driven-side rotating member pushing member, wherein the clutch actuator is any one of the clutch actuators of the present invention above.

According to the clutch actuator and the clutch of the present invention that are configured in this way, the foreign matter intrusion preventing means that prevents foreign matter from intruding into the inside of the fluid actuation chamber from between the inner peripheral surface of the outer cylinder and the piston is disposed on the outer cylinder. Consequently, the dedicated cover in the clutch actuator described in DE 10323953 A1 can be made unnecessary. As a result, the number of parts of the clutch actuator can be curtailed, the structure of the clutch actuator can be simplified, and the cost can be reduced in correspondence therewith. In particular, by using as the foreign matter intrusion preventing means the seal member that is disposed on the inner peripheral surface side of the outer cylinder, the structure of the clutch actuator can be even more effectively simplified.

Further, the inner cylinder and the outer cylinder are formed by the integral molding of a single member, so a high-precision housing can be obtained and processing can be simplified.

Moreover, the release bearing is attached, in such a way as to be attachable and detachable by means of the simply shaped snap ring, to the piston. Consequently, the attachment and detachment of the release bearing with respect to the piston becomes simple and the piston can be made into a simpler shape.

### BRIEF DESCRIPTION OF THE DRAWINGS

FIG. 1 is a view schematically showing an example of a clutch equipped with an example of an embodiment of a clutch actuator pertaining to the present invention;
FIG. 2 is a cross-sectional view along an axial direction showing the clutch actuator at a time of non-actuation in the example shown in FIG. 1;
FIG. 3 is a cross-sectional view along the axial direction showing the clutch actuator at a time of actuation in the example shown in FIG. 1;
FIG. 4 is a cross-sectional view that is the same as FIG. 2 and shows another example of the embodiment of the clutch actuator pertaining to the present invention; and
FIG. 5 is a partial cross-sectional view in an axial direction of a clutch actuator described in DE 10323953 A1.

### BEST MODES FOR CARRYING OUT THE INVENTION

Best modes for carrying out the present invention will be described below with reference to the drawings.

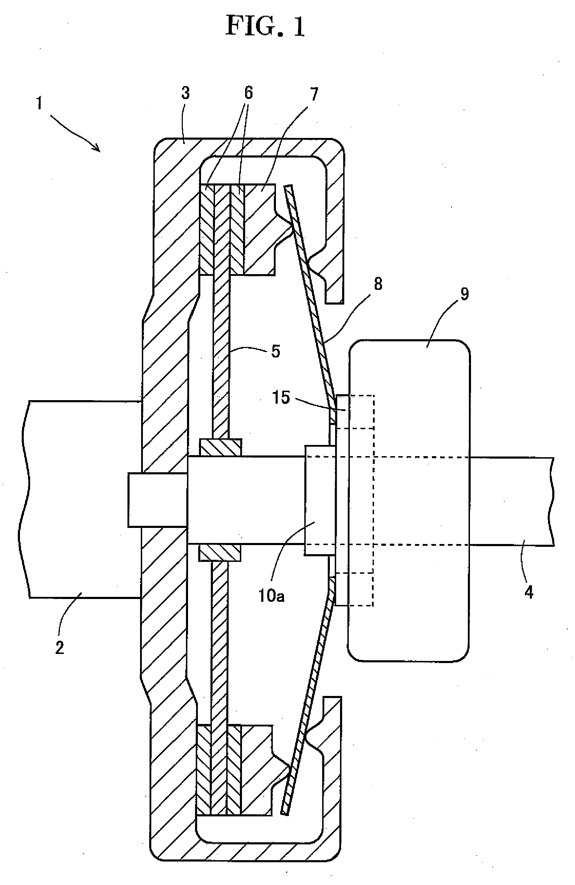

FIG. 1 is a diagram schematically showing an example of a clutch equipped with an example of an embodiment of a clutch actuator pertaining to the present invention.

As shown in FIG. 1, a clutch 1 of this example is equipped with: an output shaft 2 (which corresponds to a first shaft of the present invention) to which the output of an engine (a drive device of the present invention) is transmitted; a flywheel 3 (which corresponds to a drive-side rotating member of the present invention) that is connected to, in such a way as to be integrally rotatable with, this output shaft 2; an input shaft 4 (which corresponds to a second shaft of the present invention) of a transmission that is a driven device that is driven by the output of the engine; a friction material 6 (which corresponds to a driven-side rotating member of the present invention) that is connected to, in such a way as to be integrally rotatable with, the input shaft 4 via a disc-shaped support member 5; a friction material pushing member 7 that pushes the friction material 6 against the flywheel 3; a diaphragm spring 8 that is biasing means that biases this friction material pushing member 7 in such a way that the friction material pushing member 7 pushes the friction material 6; and a clutch actuator 9 that controls this diaphragm spring 8 . The output shaft 2 and flywheel 3 and the input shaft 4 are configured in such a way that they may freely rotate relative to each other.

As for the components of the clutch 1 other than the clutch actuator 9, conventionally publicly-known components can be used, so detailed description of those will be omitted and the clutch actuator 9 that is the direct target of the present invention will be described below.

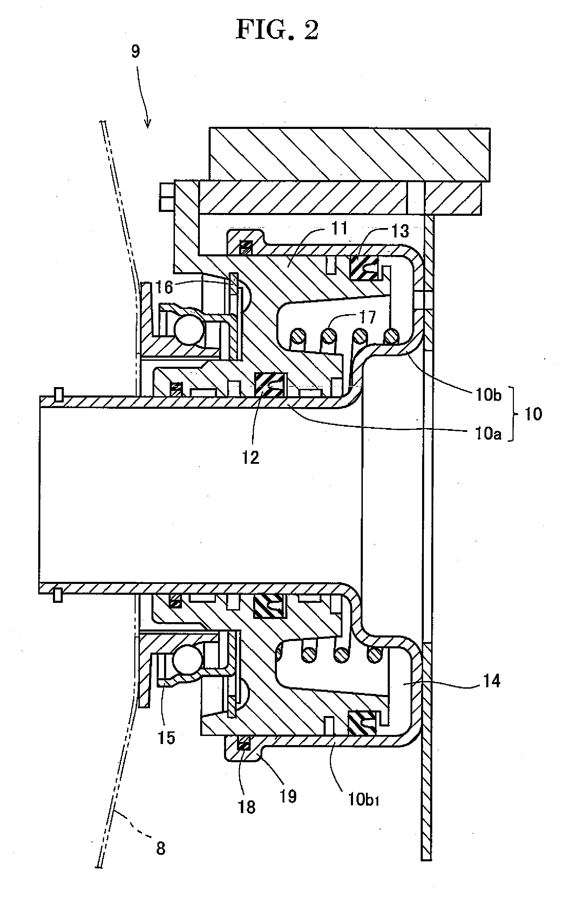

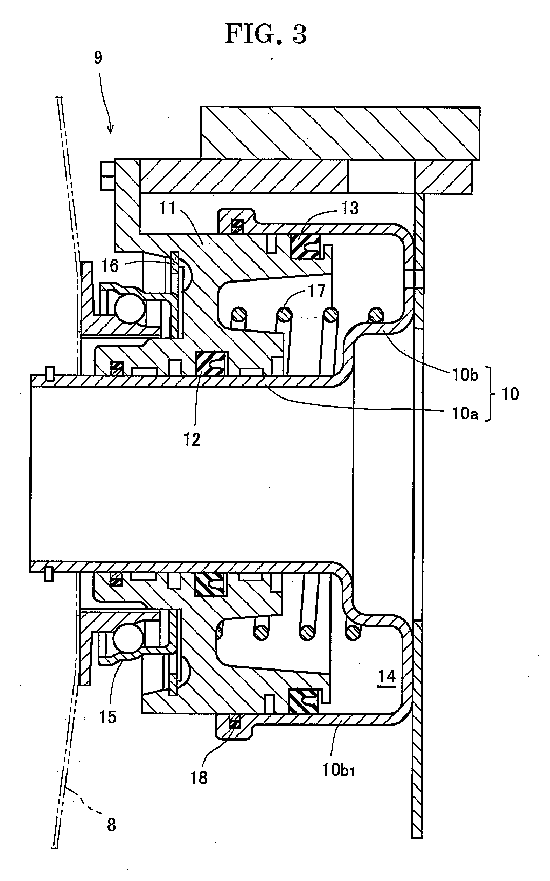

FIG. 2 is a cross-sectional view along an axial direction showing the clutch actuator at a time of non-actuation in this example, and FIG. 3 is a cross-sectional view along the axial direction showing the clutch actuator at a time of actuation in this example.

As shown in FIG. 2, the clutch actuator 9 of this example has a housing 10 that is formed as a result of an inner tube 10a (which corresponds to an inner cylinder of the present invention) and a case 10b that has a cylindrical portion 10b₁ (which corresponds to an outer cylinder of the present invention) being integrally molded as a single member. In that instance, the inner tube 10a and the cylindrical portion 10b₁ are disposed concentrically. Further, like the clutch actuator described in DE 10323953 A1, a piston 11 is disposed in such a way as to be slidable between the outer peripheral surface of the inner tube 10a and the inner peripheral surface of the cylindrical portion 10b₁ of the case 10b. In that instance, the piston 11 is fitted together, in such a way as to be fluid-tight by means of an annular seal member 12, with the outer peripheral surface of the inner tube 10a and is configured to be movable in the axial direction (the left-and-right direction in FIG. 2) on this inner tube 10a while being guided on the inner tube 10a. Further, the piston 11 is fitted together, in such a way as to be fluid-tight by means of an annular seal member 13, with the inner peripheral surface of the cylindrical portion 10b₁ of the case 10b. Because of this, a fluid actuation chamber 14 is demarcated and formed between the piston 11 and the housing 10.

A release bearing 15 is disposed on the piston 11. This release bearing 15 is attached to the piston 11 in such a way as to be attachable and detachable by means of a snap ring 16. Additionally, the release bearing 15 strongly pushes the diaphragm spring 8 to the left as a result of the movement of the piston 11 to the left in FIG. 2. Moreover, the piston 11 is always biased, by a coil spring 17 that is biasing means, in the direction in which the release bearing 15 pushes the diaphragm spring 8. In that instance, in a state where the clutch 9 is installed between the engine and the transmission, the biasing force of the diaphragm spring 8 that pushes the release bearing 15 and the piston 11 to the right is set to be larger than the biasing force of the coil spring 17 that pushes the piston 11 and the release bearing 15 to the left. Consequently, in the non-actuated state of the clutch actuator 9 shown in FIG. 2 where fluid pressure is not introduced into the fluid actuation chamber 14, the piston 11 most enters the inside of the housing 10 and is positioned in a right limit position.

Moreover, an annular seal member 18 that is foreign matter intrusion preventing means is disposed on the inner peripheral surface of the cylindrical portion 10b₁ of the housing 10. In that instance, the seal member 18 is disposed in a seal member accommodating portion 19, which is disposed on the axial direction end portion of the cylindrical portion 10b₁ and projects from the outer peripheral surface of the cylindrical portion 10b₁ in such a way that the inner peripheral surface of the cylindrical portion 10b₁ becomes recessed. Further, the seal member accommodating portion 19-that is, the seal member 18-is disposed further toward the open end side of the cylindrical portion 10b₁ than the seal member 13. This seal member 18 prevents foreign matter such as dirt existing on the outer peripheral side of the housing 10 from intruding toward the fluid actuation chamber 14 from between the inner peripheral surface of the cylindrical portion 10b₁ of the housing 10 and the outer peripheral surface of the piston 11.

The operation of the clutch actuator 9 of this example will be described.
In the non-actuated state of the clutch actuator 9 shown in FIG. 2, as mentioned above, the piston 11 is in the right limit position. In this state of the piston 11, the release bearing 15 does not strongly push the diaphragm spring 8 to the left. Consequently, as mentioned above, the friction material pushing member 7 pushes the friction material 6 against the flywheel 3 because of the biasing force of the diaphragm spring 8. Because of this, the clutch 1 is in a connected state.

Further, when fluid pressure is introduced to the fluid actuation chamber 14, as shown in FIG. 3, the piston 11 moves to the left while being guided on the inner tube 10a, and the release bearing 15 strongly pushes the diaphragm spring 8 to the left. Because of this, the pushing force of the diaphragm spring 8 on the friction material pushing member 7 is reduced or eliminated, and the friction material 6 is not pushed against the flywheel 3. Because of this, the clutch 1 enters a disconnected state.

According to the clutch actuator 9 and the clutch 1 of this example, only the seal member 18 disposed on the inner peripheral surface of the cylindrical portion 10b₁ of the case 10 is used as the foreign matter intrusion preventing means. Consequently, the dedicated cover in the clutch actuator described in DE 10323953 A1 can be made unnecessary. As a result, the number of parts of the clutch actuator 9 can be curtailed, the structure of the clutch actuator 9 can be simplified, and the cost can be reduced in correspondence therewith. In particular, by using the seal member 18 as the foreign matter intrusion preventing means, the structure of the clutch actuator 9 can be even more effectively simplified.

Further, the inner tube 10a and the case 10b are formed by the integral molding of a single member, so a high-precision housing can be obtained and processing can be simplified. Moreover, the release bearing 15 is attached, in such a way as to be attachable and detachable by means of the simply shaped snap ring 16, to the piston 11. Consequently, the attachment and detachment of the release bearing 15 with respect to the piston 11 becomes simple and the piston 11 can be made into a simpler shape.

The other configurations and the other action and effects of the clutch actuator 9 of this example are the same as those of the clutch actuator described in DE 10323953 A1.

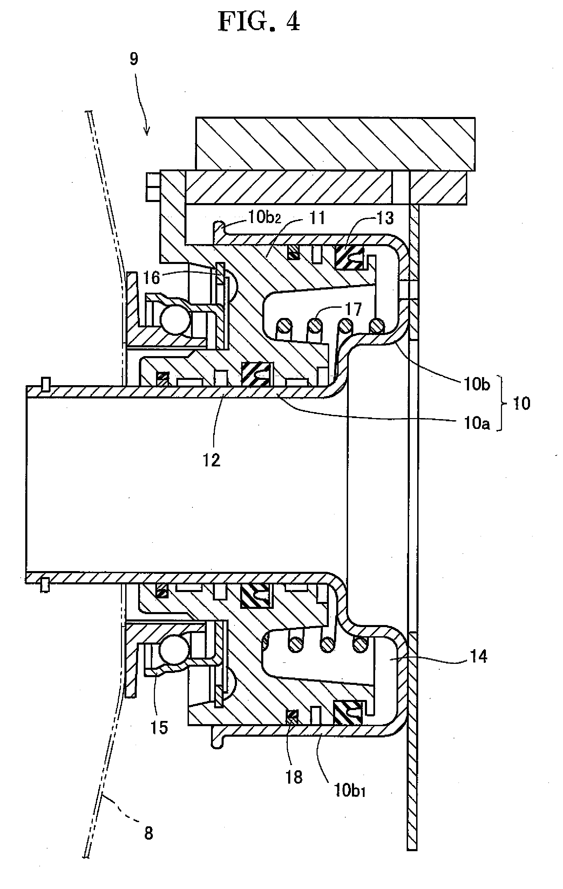

FIG. 4 is a cross-sectional view that is the same as FIG. 2 and shows another example of the embodiment of the clutch actuator pertaining to the present invention.

In the example above, the seal member 18 is disposed on the inner peripheral surface of the cylindrical portion 10b₁ of the case 10b, but as shown in FIG. 4, in the clutch actuator 9 of this example, the seal member 18 is disposed on the outer peripheral surface of the piston 11. In that instance, the seal member 18 is disposed on the outer peripheral surface of the piston that slides on the inner peripheral surface of the cylindrical portion 10b₁ even in a state where the piston 11 has maximally moved. In this way, because the seal member 18 is disposed on the piston 11, the seal member accommodating portion 19 of the above example that is disposed on the cylindrical portion 10b₁ can be made unnecessary. Because of this, the shape of the case 10b becomes simple and the processing of the housing 10 becomes easy. Further, in the example shown in FIG. 4, an annular flange 10b₂ is disposed on the open end of the cylindrical portion 10b₁, but this flange 10b₂ can also be omitted. By doing this, the shape of the case 10b becomes even simpler, the processing of the housing 10 becomes even easier, and interference with another member does not have to be taken into consideration because no projecting portion exists on the outer peripheral surface of the cylindrical portion 10b₁.

The present invention is not limited to the above examples and is capable of various design changes in the scope of matters set forth in the claims.

### INDUSTRIAL APPLICABILITY

The clutch actuator pertaining to the present invention and the clutch equipped with the clutch actuator can be utilized in a clutch actuator that performs connection control and disconnection control of a clutch and in a clutch that is equipped with the clutch actuator, and in particular can be suitably used in a clutch actuator that is actuated by fluid pressure and a clutch that is equipped with the clutch actuator.

## Claims

1. A clutch actuator comprising at least:
a housing that has an inner cylinder and an outer cylinder;
a piston that is fitted together, in such a way as to be fluid-tight and slidable, with the outer peripheral surface of the inner cylinder and the inner peripheral surface of the outer cylinder, demarcates and forms a fluid actuation chamber, and is actuated by fluid pressure of an actuation fluid that is introduced to the fluid actuation chamber; and
a release bearing that is disposed on the piston in such a way as to be integrally movable with this piston and disconnects a clutch,
wherein
the housing is formed as a result of the inner cylinder and the outer cylinder being integrally molded as a single member, and
foreign matter intrusion preventing means that prevents foreign matter from intruding into the inside of the fluid actuation chamber from between the inner peripheral surface of the outer cylinder and the piston is disposed on the outer cylinder.

2. The clutch actuator according to claim 1, wherein the foreign matter intrusion preventing means is a seal member that is disposed on the inner peripheral surface side of the outer cylinder.

3. The clutch actuator according to claim 1 or 2, wherein the release bearing is attached, in such a way as to be attachable and detachable by means of a snap ring , to the piston.

4. A clutch comprising at least:
a first shaft to which the output of a drive device is transmitted;
a drive-side rotating member that is attached to the first shaft in such a way as to be integrally rotatable with this first shaft;
a second shaft of a driven device that is driven by the output of the drive device;
a driven-side rotating member that is attached to the second shaft in such a way as to be integrally rotatable with this second shaft and so as to be pushable against and separable from the drive-side rotating member;
a driven-side rotating member pushing member that pushes the driven-side rotating member against the drive-side rotating member; and
a clutch actuator that actuates and controls the driven-side rotating member pushing member,
wherein the clutch actuator is the clutch actuator according to any one of claims 1 to 3.
